# EUROPEAN PATENT APPLICATION

(11) **EP 4 723 143 A1**
(43) Date of publication of application: **08.04.2026**
(21) Application number: 23939631.0
(22) Date of filing: 31.05.2023
(51) Int. Cl.: H01B 9/02, C08L 27/12, H01B 1/24, H01B 7/18

(54) **CABLE**

(71) Applicant: Sumitomo Electric Industries, Ltd., Osaka-shi, Osaka 541-0041 (JP)
(72) Inventor: TANAKA, Shigeyuki, Osaka-shi, Osaka 541-0041 (JP); FUJITA, Taro, Osaka-shi, Osaka 541-0041 (JP); ENDO, Hitoshi, Kanuma-shi, Tochigi 322-8585 (JP); YAGISAWA, Jo, Kanuma-shi, Tochigi 322-8585 (JP); YAMASHITA, Masanao, Osaka-shi, Osaka 541-0041 (JP)
(74) Representative: Boult Wade Tennant LLP
(86) International application number: PCT/JP2023/020254
(87) International publication number: WO 2024/247155

(57) **Abstract**

A cable includes: a conductor; a first semiconductive layer that covers an outer periphery of the conductor; an insulating layer that covers an outer periphery of the first semiconductive layer; and a second semiconductive layer that covers an outer periphery of the insulating layer, wherein the first semiconductive layer consists of a first crosslinked material of a first composition including an ethylene-tetrafluoroethylene copolymer or polyvinylidene fluoride and a conductive filler, the insulating layer consists of a second crosslinked material of a second composition including an ethylene-tetrafluoroethylene copolymer or polyvinylidene fluoride, and the second semiconductive layer consists of a third crosslinked material of a third composition including an ethylene-tetrafluoroethylene copolymer or polyvinylidene fluoride and a conductive filler.

## Description

### TECHNICAL FIELD

The present disclosure relates to a cable.

### BACKGROUND ART

Particularly among cables, a cable mounted on an aircraft is required to have durability at a high temperature. One of causes of expiration of the life of the cable is that an insulating layer that covers a conductor is deteriorated due to partial discharge that occurs during use.

PTL 1 discloses a technique of using a fluoropolymer electric insulating layer as an insulating layer in order to suppress the partial discharge.

### CITATION LIST

### PATENT LITERATURE

PTL 1: European Patent Publication No. 2765581

### SUMMARY OF INVENTION

A cable according to the present disclosure is a cable comprising:
a conductor;
a first semiconductive layer that covers an outer periphery of the conductor;
an insulating layer that covers an outer periphery of the first semiconductive layer; and
a second semiconductive layer that covers an outer periphery of the insulating layer, wherein
the first semiconductive layer consists of a first crosslinked material of a first composition including an ethylene-tetrafluoroethylene copolymer or polyvinylidene fluoride and a conductive filler,
the insulating layer consists of a second crosslinked material of a second composition including an ethylene-tetrafluoroethylene copolymer or polyvinylidene fluoride, and
the second semiconductive layer consists of a third crosslinked material of a third composition including an ethylene-tetrafluoroethylene copolymer or polyvinylidene fluoride and a conductive filler.

### BRIEF DESCRIPTION OF DRAWINGS

[Fig. 1] Fig. 1 is a cross sectional view of an exemplary cable according to a first embodiment.
[Fig. 2] Fig. 2 is a cross sectional view of another exemplary cable according to the first embodiment.
[Fig. 3] Fig. 3 is a diagram showing a first cross section of the cable to illustrate a gap length.
[Fig. 4] Fig. 4 is a diagram showing a second cross section of the cable to illustrate the gap length.

### DETAILED DESCRIPTION

### [Problem to be Solved by the Present Disclosure]

When a cable used for supply of power is fed with power in an aircraft or space environment, the cable is exposed to a high temperature. Since the fluoropolymer electric insulating layer used for the insulating layer in PTL 1 is a non-crosslinked layer, the polymer is melted to decrease its strength under a high temperature condition of, for example, 320°C or more, thus resulting in expiration of the life of the cable. Therefore, there has been required a cable having an insulating layer that is not melted even when the cable is used under a high temperature condition such as an aircraft or space environment.

Thus, an object of the present disclosure is to provide a cable having an insulating layer that is not melted even when the cable is used under a high temperature condition.

### [Advantageous Effect of the Present Disclosure]

According to the present disclosure, it is possible to provide a cable having an insulating layer that is not melted even when the cable is used under a high temperature condition.

### [Description of Embodiments]

First, embodiments of the present disclosure will be listed and described.
(1) A cable according to the present disclosure is a cable comprising:
   a conductor;
   a first semiconductive layer that covers an outer periphery of the conductor;
   an insulating layer that covers an outer periphery of the first semiconductive layer; and
   a second semiconductive layer that covers an outer periphery of the insulating layer, wherein
   the first semiconductive layer consists of a first crosslinked material of a first composition including an ethylene-tetrafluoroethylene copolymer or polyvinylidene fluoride and a conductive filler,
   the insulating layer consists of a second crosslinked material of a second composition including an ethylene-tetrafluoroethylene copolymer or polyvinylidene fluoride, and
   the second semiconductive layer consists of a third crosslinked material of a third composition including an ethylene-tetrafluoroethylene copolymer or polyvinylidene fluoride and a conductive filler.
   According to the present disclosure, it is possible to provide a cable having an insulating layer that is not melted even when the cable is used under a high temperature condition.
(2) In (1), an average thickness of the insulating layer may be 0.10 mm or more and 2.0 mm or less. According to this, extrusion molding at the time of production of the cable is facilitated, and flexibility of the cable is obtained, thereby attaining ease of handling.
(3) In (1) or (2), an average thickness of the insulating layer may be more than 0.70 mm. According to this, a gap length to attain suppression of partial discharge can be large. Details of the gap length will be described later.
(4) In any one of (1) to (3), an average thickness of the first semiconductive layer may be 0.10 mm or more and 0.5 mm or less. According to this, extrusion molding at the time of production of the cable is facilitated, and flexibility of the cable is obtained, thereby attaining ease of handling.
(5) In any one of (1) to (4), an average thickness of the second semiconductive layer may be 0.10 mm or more and 0.5 mm or less. According to this, extrusion molding at the time of production of the cable is facilitated, and flexibility of the cable is obtained, thereby attaining ease of handling.
(6) In any one of (1) to (5), the cable may further comprise: a shield layer that covers an outer periphery of the second semiconductive layer; and a jacket that covers an outer periphery of the shield layer, wherein
   the jacket may consist of a fourth crosslinked material of a fourth composition including an ethylene-tetrafluoroethylene copolymer or polyvinylidene fluoride.
   When the shielding layer is present, the cable can attain an excellent noise shielding effect. The jacket mechanically protects the conductor, the first semiconductive layer, the insulating layer, the second semiconductive layer, and the shield layer, and can provide the cable with functions such as flame retardancy and oil resistance.
(7) In any one of (1) to (6), an elastic modulus of the first semiconductive layer at 330°C may be 0.1 MPa or more.
(8) In any one of (1) to (7), an elastic modulus of the insulating layer at 330°C may be 0.1 MPa or more.
(9) In any one of (1) to (8), an elastic modulus of the second semiconductive layer at 330°C may be 0.1 MPa or more.

### [Details of Embodiments of the Present Disclosure]

A specific example of the cable of the present disclosure will be described below with reference to figures. In the figures of the present disclosure, the same reference characters represent the same or corresponding portions. Further, a dimensional relation such as a length, a width, a thickness, or a depth is appropriately changed for clarity and simplification of the figures, and therefore do not necessarily represent an actual dimensional relation.

In the present disclosure, the expression "A to B" represents a range of lower to upper limits (i.e., A or more and B or less), and when no unit is indicated for A and a unit is indicated only for B, the unit of A is the same as the unit of B.

In the present disclosure, when one or more numerical values are described as each of lower and upper limits of a numerical range, it is assumed that a combination of any one numerical value described as the lower limit and any one numerical value described as the upper limit is also disclosed. For example, in the case where a1 or more, b1 or more, and c1 or more are each described as the lower limit and a2 or less, b2 or less, and c2 or less are each described as the upper limit, it is assumed that a1 or more and a2 or less, a1 or more and b2 or less, a1 or more and c2 or less, b1 or more and a2 or less, b1 or more and b2 or less, b1 or more and c2 or less, c1 or more and a2 or less, c1 or more and b2 or less, and c1 or more and c2 or less are disclosed.

### [First Embodiment: Cable]

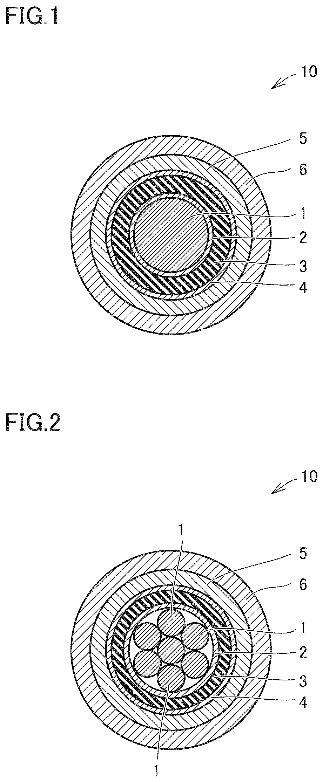

A cable 10 according to one embodiment (hereinafter, also referred to as "first embodiment") of the present disclosure will be described with reference to Fig. 1. As shown in Fig. 1, cable 10 according to the first embodiment is a cable 10 comprising:
a conductor 1;
a first semiconductive layer 2 that covers an outer periphery of conductor 1;
an insulating layer 3 that covers an outer periphery of first semiconductive layer 2; and
a second semiconductive layer 4 that covers an outer periphery of insulating layer 3, wherein
first semiconductive layer 2 consists of a first crosslinked material of a first composition including an ethylene-tetrafluoroethylene copolymer or polyvinylidene fluoride and a conductive filler,
insulating layer 3 consists of a second crosslinked material of a second composition including an ethylene-tetrafluoroethylene copolymer or polyvinylidene fluoride, and
second semiconductive layer 4 consists of a third crosslinked material of a third composition including an ethylene-tetrafluoroethylene copolymer or polyvinylidene fluoride and a conductive filler.

### < Structure of Cable>

As shown in Figs. 1 and 2, cable 10 according to the first embodiment includes: conductor 1; first semiconductive layer 2 that covers the outer periphery of conductor 1; insulating layer 3 that covers the outer periphery of first semiconductive layer 2; and second semiconductive layer 4 that covers the outer periphery of insulating layer 3. The whole of an outer peripheral surface of first semiconductive layer 2 can be in contact with and covered with an inner peripheral surface of insulating layer 3. As long as the effects of the present disclosure are not impaired, the outer peripheral surface of first semiconductive layer 2 and the inner peripheral surface of insulating layer 3 may not be partially in contact with each other. The whole of an outer peripheral surface of insulating layer 3 may be in contact with and covered with an inner peripheral surface of second semiconductive layer 4. As long as the effects of the present disclosure are not impaired, the outer peripheral surface of insulating layer 3 and the inner peripheral surface of second semiconductive layer 4 may not be partially in contact with each other.

Cable 10 of the first embodiment can further include: a shield layer 5 that covers an outer periphery of second semiconductive layer 4; and a jacket 6 that covers an outer periphery of shield layer 5. The whole of an outer peripheral surface of second semiconductive layer 4 can be covered with shield layer 5. As long as the effects of the present disclosure are not impaired, second semiconductive layer 4 may not be partially covered with shield layer 5. The whole of an outer peripheral surface of shield layer 5 can be covered with jacket 6. As long as the effects of the present disclosure are not impaired, shield layer 5 may not be partially covered with jacket 6.

### <Conductor>

In cable 10 of the first embodiment, the material of conductor 1 is preferably a metal material having high conductivity and large mechanical strength. Examples of such a metal material include copper, a copper alloy, aluminum, an aluminum alloy, nickel, silver, soft iron, steel, and stainless steel. Conductor 1 may have a multilayer structure in which a wire material is further covered with another metal using a technique such as plating. Examples of conductor 1 having such a multilayer structure include a tin-plated copper wire, a nickel-plated copper wire, a silver-plated copper wire, a copper-plated aluminum wire, and a copper-plated steel wire.

The shape of conductor 1 is not particularly limited, and a conventionally known shape can be used. For example, conductor 1 can be a wire obtained by forming a single type of metal material to have a shape of line. Examples of the shape of the wire include: a round wire having a circular cross section; a square wire having a square cross section; and a rectangular wire having a rectangular cross section. Conductor 1 can be a stranded wire formed by twisting a plurality of elemental wires. As shown in Fig. 1, conductor 1 may consist of a single wire or a single stranded wire. As shown in Fig. 2, conductor 1 may consist of a plurality of wires or a plurality of stranded wires.

The average cross sectional area of conductor 1 is not particularly limited, and can be appropriately selected depending on a purpose of use. The average cross sectional area of conductor 1 may be 10 mm² or more and 120 mm² or less, or 13 mm² or more and 110 mm² or less. In the present disclosure, a method of measuring the average cross sectional area of conductor 1 is as follows. One cable 10 is stretched in the form of a straight line, cable 10 is cut along a plane having a normal line corresponding to a first direction connecting one end portion to the other end portion of cable 10 so as to expose a cross section thereof, thereby measuring the cross sectional area of conductor 1. For one cable 10, cable 10 is cut at any five locations along the plane having the normal line corresponding to the first direction so as to measure the cross sectional areas of conductor 1, and the average value of the cross sectional areas of conductor 1 at the five locations is calculated. The average value corresponds to the average cross sectional area of conductor 1.

### <First Semiconductive Layer>

In cable 10 of the first embodiment, first semiconductive layer 2 is provided to cover the outer periphery of conductor 1. First semiconductive layer 2 has semiconductivity and can suppress occurrence of partial discharge by attaining a small potential difference in a space between conductor 1 and first semiconductive layer 2.

First semiconductive layer 2 consists of the first crosslinked material of the first composition including the ethylene-tetrafluoroethylene copolymer (hereinafter, also referred to as "ETFE") or the polyvinylidene fluoride (hereinafter, also referred to as "PVdF") and the conductive filler.

Each of the ethylene-tetrafluoroethylene copolymer and the polyvinylidene fluoride can form a crosslinked material by applying radiation thereto. Each of the crosslinked material of the ethylene-tetrafluoroethylene copolymer and the crosslinked material of the polyvinylidene fluoride is not melted even under a high temperature condition of, for example, 320°C or more. Since the first crosslinked material constituting first semiconductive layer 2 in the first embodiment is the crosslinked material of the first composition including the ethylene-tetrafluoroethylene copolymer or the polyvinylidene fluoride, the first crosslinked material is also not melted even under the high temperature condition. Therefore, the strength of first semiconductive layer 2 can be maintained even under the high temperature condition.

The inclusion of the ethylene-tetrafluoroethylene copolymer or the polyvinylidene fluoride in first semiconductive layer 2 can be confirmed by infrared spectrophotometer (IR), nuclear magnetic resonance spectroscopy (NMR), differential scanning calorimeter (DSC), or the like. Also in each of insulating layer 3 and second semiconductive layer 4 described below, the inclusion of the ethylene-tetrafluoroethylene copolymer or the polyvinylidene fluoride can be confirmed by the same method.

The elastic modulus of first semiconductive layer 2 at 330°C may be 0.1 MPa or more. According to this, first semiconductive layer 2 can have high strength while not melted even under a high temperature condition of 330°C. The lower limit of the elastic modulus of first semiconductive layer 2 at 330°C may be 0.5 MPa or more, 1.0 MPa or more, 1.5 MPa or more, or 1.8 MPa or more. The upper limit of the elastic modulus of first semiconductive layer 2 at 330°C is not particularly limited, but may be, for example, 10 MPa or less or 5 MPa or less from the viewpoint of handling at a high temperature. The elastic modulus of first semiconductive layer 2 at 330°C may be 0.1 MPa or more and 10 MPa or less, or may be 0.5 MPa or more and 10 MPa or less.

A method of measuring the elastic modulus of first semiconductive layer 2 at 330°C is as follows. A measurement piece is prepared by separating first semiconductive layer 2 from cable 10. The storage elastic modulus of the measurement piece is measured using a viscoelasticity measurement apparatus ("DVA-220" (trademark) provided by IT Keisoku Seigyo) in accordance with Plastics-Determination of dynamic mechanical properties as described in JIS K7244-4:1999 (corresponding to ISO6721-4:1994). Measurement conditions are as follows: a tensile mode, a temperature range of -50°C to 350°C, a temperature increase rate of 10°C/minute, a frequency of 10 Hz, and a strain of 0.08%. The elastic modulus of the measurement piece at 330°C is found from the storage elastic modulus of the measurement piece measured under the above conditions. Each of the elastic modulus of insulating layer 3 at 330°C and the elastic modulus of second semiconductive layer 4 at 330°C as described below is measured by the same measurement method as described above using a measurement piece obtained by separating insulating layer 3 or second semiconductive layer 4 from cable 10.

Examples of the conductive filler include carbon black, a carbon nanotube, and various types of conductive metal particles. One type or two or more types of these conductive fillers may be used. The inclusion of the conductive filler in first semiconductive layer 2 can be confirmed by an element analysis such as scanning electron microscope observation (SEM) or energy dispersive X-ray analysis (EDX). Also in second semiconductive layer 4 described later, the inclusion of the conductive filler can be confirmed by the same method.

When the carbon black is used as the conductive filler, the lower limit of the content ratio of the carbon black in first semiconductive layer 2 may be 5 mass% or more, 10 mass% or more, or 15 mass% or more from the viewpoint of securing conductivity. The upper limit of the content ratio of the carbon black in first semiconductive layer 2 may be 50 mass% or less, 45 mass% or less, or 40 mass% or less from the viewpoint of extrusion moldability. The content ratio of the carbon black in first semiconductive layer 2 may be 5 mass% or more and 50 mass% or less, 10 mass% or more and 45 mass% or less, or 15 mass% or more and 40 mass% or less. The content ratio of the carbon black in first semiconductive layer 2 can be measured by the scanning electron microscope observation (SEM), specific gravity measurement, volume resistivity measurement, or the like.

In cable 10 of the first embodiment, the first composition may include a component other than the ethylene-tetrafluoroethylene copolymer, the polyvinylidene fluoride, and the conductive filler. Examples of the other component include a crosslinking auxiliary agent, an antioxidizing agent, a lubricant, a colorant, a processing auxiliary agent, and a flame retardant.

Examples of the crosslinking auxiliary agent include triallyl isocyanurate, trimethylolpropane trimethacrylate, and the like. Examples of the antioxidizing agent include a phenol-based antioxidizing agent, a sulfur-based antioxidizing agent, an amine-based antioxidizing agent, and the like.

The content ratio of the crosslinking auxiliary agent in the first composition can be appropriately adjusted depending on the type of the crosslinking auxiliary agent. The content ratio of the crosslinking auxiliary agent in the first composition may be, for example, 0.5 mass% or more and 10 mass% or less, or 1 mass% or more and 7 mass% or less.

The content ratio of the antioxidizing agent in the first composition can be appropriately adjusted depending on the type of the antioxidizing agent. The content ratio of the antioxidizing agent in the first composition may be, for example, 0.01 mass% or more and 5 mass% or less, or 0.03 mass% or more and 3 mass% or less.

The lower limit of the volume resistivity of first semiconductive layer 2 at a room temperature may be 1 Ω·cm or more, 5 Ω·cm or more, or 10 Ω·cm or more. The upper limit of the volume resistivity of first semiconductive layer 2 at the room temperature may be 100000 Ω·cm or less, 50000 Ω·cm or less, 10000 Ω·cm or less, or 1000 Ω·cm or less. The volume resistivity of first semiconductive layer 2 at the room temperature may be 1 Ω·cm or more and 100000 Ω·cm or less, 5 Ω·cm or more and 50000 Ω·cm or less, or 10 Ω·cm or more and 10000 Ω·cm or less. In the present disclosure, the room temperature means 25°C.

In the first embodiment, first semiconductive layer 2 has a smaller volume expansion coefficient under the high temperature condition than a non-crosslinked material of the first composition having the same raw material composition as that of first semiconductive layer 2. Therefore, the volume resistivity of first semiconductive layer 2 at 100°C can be smaller than the volume resistivity, at 100°C, of the non-crosslinked material of the first composition having the same raw material composition as that of first semiconductive layer 2.

The lower limit of the volume resistivity of first semiconductive layer 2 at 100°C may be 2 Ω·cm or more, 10 Ω·cm or more, or 20 Ω·cm or more. The upper limit of the volume resistivity of first semiconductive layer 2 at 100°C may be 200000 Ω·cm or less, 100000 Ω·cm or less, 20000 Ω·cm or less, 10000 Ω·cm or less, 5000 Ω·cm or less, or 2000 Ω·cm or less. The volume resistivity of first semiconductive layer 2 at 100°C may be 2 Ω·cm or more and 200000 Ω·cm or less, 10 Ω·cm or more and 100000 Ω·cm or less, or 20 Ω·cm or more and 20000 Ω·cm or less.

A ratio ρ2/ρ1 of volume resistivity ρ2 of first semiconductive layer 2 at 100°C to volume resistivity ρ1 of first semiconductive layer 2 at the room temperature may be 1.5 or more and 2.5 or less, may be 1.5 or more and 2.3 or less, may be 1.5 or more and 2.1 or less, or may be 1.5 or more and 1.9 or less.

A method of measuring the volume resistivity of first semiconductive layer 2 at each of the room temperature and 100°C is as follows. A test piece is prepared by separating first semiconductive layer 2 from cable 10. The storage elastic modulus of the test piece is measured using a resistivity meter ("Loresta-GP" (trademark) provided by Mitsubishi Chemical Corporation) in accordance with Testing method for resistivity of conductive plastics with a four-point probe array as described in JIS K7194-1994.

The average thickness of first semiconductive layer 2 can be appropriately adjusted depending on the purpose of use of cable 10. The lower limit of the average thickness of first semiconductive layer 2 may be 0.10 mm or more or may be 0.15 mm or more from the viewpoint of ease of extrusion molding at the time of production of cable 10. The upper limit of the average thickness of first semiconductive layer 2 may be 0.50 mm or less or may be 0.40 mm or less from the viewpoint of flexibility and ease of handling of the cable. The average thickness of first semiconductive layer 2 may be 0.10 mm or more and 0.50 mm or less, or may be 0.10 mm or more and 0.40 mm or less.

In the present disclosure, a method of measuring the average thickness of first semiconductive layer 2 is as follows. One cable 10 is stretched in the form of a straight line, and conductor 1 is cut along the plane having the normal line corresponding to the first direction connecting the one end portion to the other end portion of cable 10 so as to expose a cross section thereof. In the cross section, the thickness of first semiconductive layer 2 is measured at three locations to find an average value A thereof. A digital microscope VHX-8000 from Keyence is used as a measurement apparatus. For one cable 10, conductor 1 is cut at any five locations along the plane having the normal line corresponding to the first direction so as to measure average value A of the thicknesses of first semiconductive layer 2 at each of the five locations. An average value B of average values A at the five locations is calculated. Average value B corresponds to the average thickness of first semiconductive layer 2. Each of the average thickness of insulating layer 3 and the average thickness of second semiconductive layer 4 as described below is also measured by the same method. Each of a boundary between first semiconductive layer 2 and insulating layer 3 and a boundary between insulating layer 3 and second semiconductive layer 4 can be clearly confirmed by observation with the above-described measurement apparatus.

### <Insulating Layer>

In cable 10 of the first embodiment, insulating layer 3 is provided to cover the outer periphery of first semiconductive layer 2.

Insulating layer 3 consists of the second crosslinked material of the second composition including the ethylene-tetrafluoroethylene copolymer or the polyvinylidene fluoride. As long as the effects of the present disclosure are not impaired, insulating layer 3 may include an impurity together with the second crosslinked material.

Each of the ethylene-tetrafluoroethylene copolymer and the polyvinylidene fluoride can form a crosslinked material by applying radiation thereto. Each of the crosslinked material of the ethylene-tetrafluoroethylene copolymer and the crosslinked material of the polyvinylidene fluoride is not melted even under a high temperature condition of, for example, 300°C or more. Since the second crosslinked material constituting insulating layer 3 in the first embodiment is the crosslinked material of the second composition including the ethylene-tetrafluoroethylene copolymer or the polyvinylidene fluoride, the second crosslinked material is also not melted even under the high temperature condition. Therefore, the strength of insulating layer 3 can be maintained even under the high temperature condition.

The elastic modulus of insulating layer 3 at 330°C may be 0.1 MPa or more. According to this, second semiconductive layer 4 can have high strength while not melted even under a high temperature condition of 330°C. The lower limit of the elastic modulus of insulating layer 3 at 330°C may be 0.5 MPa or more, 1.0 MPa or more, or 1.3 MPa or more. The upper limit of the elastic modulus of insulating layer 3 at 330°C is not particularly limited, but may be, for example, 10 MPa or less or 5 MPa or less from the viewpoint of handling at a high temperature. The elastic modulus of insulating layer 3 at 330°C may be 0.1 MPa or more and 10 MPa or less, or may be 0.5 MPa or more and 10 MPa or less.

In cable 10 of the first embodiment, the second composition can include a component other than the ethylene-tetrafluoroethylene copolymer and the polyvinylidene fluoride. Examples of the other component include a crosslinking auxiliary agent, an antioxidizing agent, a lubricant, a colorant, a processing auxiliary agent, and a flame retardant.

Examples of the crosslinking auxiliary agent include triallyl isocyanurate, trimethylolpropane trimethacrylate, and the like. Examples of the antioxidizing agent include a phenol-based antioxidizing agent, a sulfur-based antioxidizing agent, an amine-based antioxidizing agent, and the like.

The content ratio of the crosslinking auxiliary agent in the second composition can be appropriately adjusted depending on the type of the crosslinking auxiliary agent. The content ratio of the crosslinking auxiliary agent in the second composition may be, for example, 0.5 mass% or more and 10 mass% or less, or 1 mass% or more and 7 mass% or less.

The content ratio of the antioxidizing agent in the second composition can be appropriately adjusted depending on the type of the antioxidizing agent. The content ratio of the antioxidizing agent in the second composition may be, for example, 0.01 mass% or more and 5 mass% or less, or 0.03 mass% or more and 3 mass% or less.

The average thickness of insulating layer 3 can be appropriately adjusted depending on the purpose of use of cable 10. The lower limit of the average thickness of insulating layer 3 may be 0.10 mm or more, 0.15 mm or more, or 0.2 mm or more from the viewpoint of ease of extrusion molding at the time of production of cable 10. The upper limit of the average thickness of insulating layer 3 may be 2.00 mm or less, 1.75 mm or less, or 1.50 mm or less from the viewpoint of flexibility and ease of handling of the cable. The average thickness of first semiconductive layer 2 may be 0.10 mm or more and 2.00 mm or less, may be 0.10 mm or more and 1.75 mm or less, may be 0.15 mm or more and 1.75 mm or less, or may be 0.2 mm or more and 1.50 mm or less.

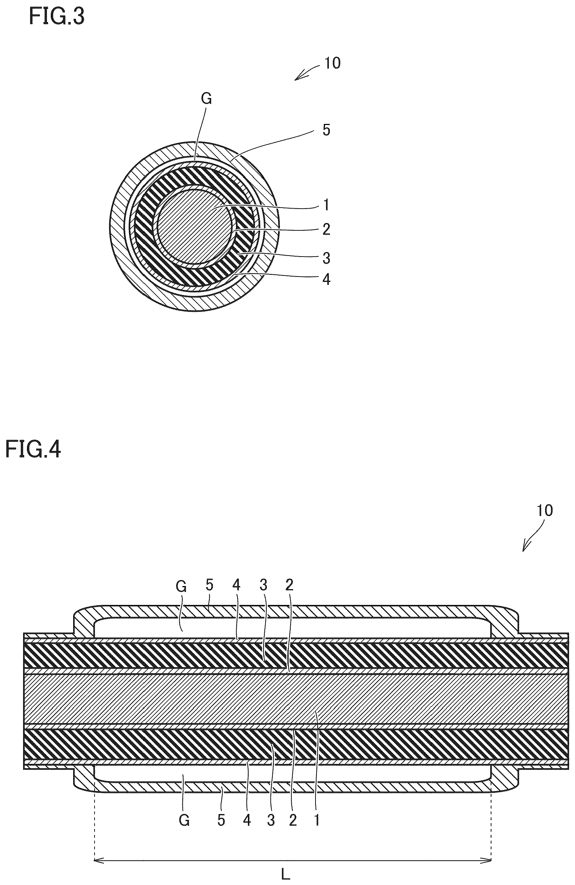

The average thickness of insulating layer 3 may be more than 0.70 mm. According to this, a gap length to avoid occurrence of partial discharge can be large. The gap length (gap length) in the present disclosure will be described with reference to Figs. 3 and 4. Fig. 3 is a diagram showing a first cross section of cable 10 obtained by cutting cable 10 along the plane having the normal line corresponding to the first direction connecting the one end portion to the other end portion. Fig. 4 is a diagram showing a second cross section of cable 10 obtained by cutting cable 10 along the plane along the first direction. As shown in Fig. 3, an "entire peripheral gap" represents a gap that is present between the outer surface of second semiconductive layer 4 and the inner surface of shield layer 5 in the specific first cross section and that forms a state in which second semiconductive layer 4 and shield layer 5 are not in contact with each other across the entire periphery of second semiconductive layer 4. In Fig. 3, the entire peripheral gap is denoted by a reference character G. As shown in Fig. 4, the length of entire peripheral gap G continuously present along the first direction of cable 10 is referred to as the "gap length". In Fig. 3, the gap length is denoted by a reference character L. When gap length L becomes larger, partial discharge in the case where there is a potential difference between conductor 1 and shield layer 5 is more likely to occur. When the average thickness of insulating layer 3 is more than 0.70 mm, gap length L to attain suppression of partial discharge can be large.

The average thickness of insulating layer 3 may be more than 0.70 mm, 0.71 mm or more, or 0.75 mm or more from the viewpoint of attaining large gap length L to attain suppression of partial discharge. The average thickness of insulating layer 3 may be more than 0.70 mm and 3.0 mm or less, more than 0.70 mm and 2.0 mm or less, 0.71 mm or more and 3.0 mm or less, or 0.75 mm or more and 3.0 mm or less.

### <Second Semiconductive Layer>

In cable 10 of the first embodiment, second semiconductive layer 4 is provided to cover the outer periphery of insulating layer 3. Second semiconductive layer 4 has semiconductivity. When second semiconductive layer 4 is present, the occurrence of partial discharge can be suppressed by making a potential difference small between second semiconductive layer 4 and shield layer 5 in the case where cable 10 includes shield layer 5 that covers the outer periphery of second semiconductive layer 4.

Second semiconductive layer 4 consists of the third crosslinked material of the third composition including the ethylene-tetrafluoroethylene copolymer or the polyvinylidene fluoride and the conductive filler.

Each of the ethylene-tetrafluoroethylene copolymer and the polyvinylidene fluoride can form the crosslinked material by applying radiation thereto. Each of the crosslinked material of the ethylene-tetrafluoroethylene copolymer and the crosslinked material of the polyvinylidene fluoride is not melted even under a high temperature condition of, for example, 320°C or more. Since the third crosslinked material constituting second semiconductive layer 4 in the first embodiment is the crosslinked material of the third composition including the ethylene-tetrafluoroethylene copolymer or the polyvinylidene fluoride, the third crosslinked material is also not melted even under the high temperature condition. Therefore, the strength of second semiconductive layer 4 can be maintained even under the high temperature condition.

The elastic modulus of second semiconductive layer 4 at 330°C may be 0.1 MPa or more. According to this, second semiconductive layer 4 can have high strength while not melted even under the high temperature condition of 330°C. The lower limit of the elastic modulus of second semiconductive layer 4 at 330°C may be 0.5 MPa or more, 1.0 MPa or more, 1.5 MPa or more, or 1.8 MPa or more. The upper limit of the elastic modulus of second semiconductive layer 4 at 330°C is not particularly limited, but may be, for example, 10 MPa or less or 5 MPa or less from the viewpoint of handling at the high temperature. The elastic modulus of second semiconductive layer 4 at 330°C may be 0.1 MPa or more and 10 MPa or less, or may be 0.5 MPa or more and 10 MPa or less.

The type and content ratio of the conductive filler included in second semiconductive layer 4 can be the same as those of the conductive filler included in first semiconductive layer 2. The type and content ratio of the conductive filler included in second semiconductive layer 4 may be the same as or different from those of the conductive filler included in first semiconductive layer 2.

In cable 10 of the first embodiment, the third composition can include a component other than the ethylene-tetrafluoroethylene copolymer, the polyvinylidene fluoride, and the conductive filler. Examples of the other component include a crosslinking auxiliary agent, an antioxidizing agent, a lubricant, a colorant, a processing auxiliary agent, and a flame retardant. The type and content ratio of the other component can be the same as those of the other component included in the first composition. The type and content ratio of the other component included in the third composition may be the same as or different from those of the other component included in the first composition.

In cable 10 of the first embodiment, the first composition and the third composition may be the same composition or different compositions. In cable 10 of the first embodiment, the first crosslinked material and the third crosslinked material may be the same crosslinked material or may be different crosslinked materials.

The volume resistivity of second semiconductive layer 4 at the room temperature and the volume resistivity of second semiconductive layer 4 at 100°C can fall within the same ranges as those of the volume resistivity of first semiconductive layer 2 at the room temperature and the volume resistivity of first semiconductive layer 2 at 100°C, respectively. The volume resistivity of second semiconductive layer 4 at the room temperature and the volume resistivity of second semiconductive layer 4 at 100°C may be the same as or different from the volume resistivity of first semiconductive layer 2 at the room temperature and the volume resistivity of first semiconductive layer 2 at 100°C, respectively.

The average thickness of second semiconductive layer 4 can be appropriately adjusted depending on the purpose of use of cable 10. The lower limit of the average thickness of second semiconductive layer 4 may be 0.10 mm or more or may be 0.15 mm or more from the viewpoint of ease of extrusion molding at the time of production of cable 10. The upper limit of the average thickness of second semiconductive layer 4 may be 0.50 mm or less or may be 0.40 mm or less from the viewpoint of flexibility and ease of handling of the cable. The average thickness of second semiconductive layer 4 may be 0.10 mm or more and 0.50 mm or less, or may be 0.10 mm or more and 0.40 mm or less.

As described above, in cable 10 of the first embodiment, each of first semiconductive layer 2, insulating layer 3, and second semiconductive layer 4 is not melted even under the high temperature condition, and the strength thereof can be maintained. Therefore, cable 10 of the first embodiment can have a long life even when used under the high temperature condition.

### <Shield Layer>

In cable 10 of the first embodiment, shield layer 5 is provided to cover the outer periphery of second semiconductive layer 4. When shield layer 5 is present, cable 10 can attain an excellent noise shielding effect. In order to improve the shielding effect, shield layer 5 may be grounded.

As shield layer 5, a metal tape, a braided shield, or the like can be used. The material of shield layer 5 is preferably a metal material having high conductivity and large mechanical strength. Examples of such a metal material include copper, a copper alloy, aluminum, an aluminum alloy, nickel, silver, soft iron, steel, and stainless steel.

The braided shield is formed by braiding a braided wire consisting of a metal element wire. The metal braid is not particularly limited, and a conventionally known metal braid can be used. As the metal braid, it is possible to use a tube-shaped metal braid obtained by knitting a wire material obtained by forming one type of metal material into a shape of wire. It is also possible to use a metal braid having a multilayer structure in which the wire material is further covered with another metal.

### <Jacket>

In cable 10 of the first embodiment, jacket 6 is provided to cover the outer periphery of shield layer 5. Jacket 6 mechanically protects conductor 1, first semiconductive layer 2, insulating layer 3, second semiconductive layer 4, and shield layer 5, and can provide cable 10 with functions such as flame retardancy and oil resistance.

Jacket 6 can consist of a fourth crosslinked material of a fourth composition including an ethylene-tetrafluoroethylene copolymer or polyvinylidene fluoride.

Each of the ethylene-tetrafluoroethylene copolymer and the polyvinylidene fluoride can form a crosslinked material by applying radiation thereto. Each of the crosslinked material of the ethylene-tetrafluoroethylene copolymer and the crosslinked material of the polyvinylidene fluoride is not melted even under a high temperature condition of, for example, 300°C or more. Since the fourth crosslinked material constituting jacket 6 in the first embodiment is the crosslinked material of the fourth composition including the ethylene-tetrafluoroethylene copolymer or the polyvinylidene fluoride, the fourth crosslinked material is also not melted even under the high temperature condition. Therefore, the strength of jacket 6 can be maintained even under the high temperature condition.

The elastic modulus of jacket 6 at 330°C may be 0.1 MPa or more. According to this, jacket 6 can have high strength while not melted even under a high temperature condition of 330°C. The lower limit of the elastic modulus of jacket 6 at 330°C may be 0.5 MPa or more, 1.0 MPa or more, 1.5 MPa or more, or 1.8 MPa or more. The upper limit of the elastic modulus of jacket 6 at 330°C is not particularly limited, but may be, for example, 10 MPa or less or 5 MPa or less from the viewpoint of handling at a high temperature. The elastic modulus of jacket 6 at 330°C may be 0.1 MPa or more and 10 MPa or less, or may be 0.5 MPa or more and 10 MPa or less.

In cable 10 of the first embodiment, the fourth composition can include a component other than the ethylene-tetrafluoroethylene copolymer and the polyvinylidene fluoride. The type and content ratio of the other component can be the same as those of the other component included in the second composition. The type and content ratio of the other component included in the fourth composition may be the same as or different from those of the other component included in the second composition.

The average thickness of jacket 6 can be appropriately adjusted depending on the purpose of use of cable 10. The lower limit of the average thickness of jacket 6 may be 0.10 mm or more, 0.15 mm or more, or 0.2 mm or more from the viewpoint of ease of extrusion molding at the time of production of cable 10. The upper limit of the average thickness of jacket 6 may be 3.0 mm or less, 2.0 mm or less, or 1.5 mm or less from the viewpoint of flexibility and ease of handling of the cable. The average thickness of jacket 6 may be 0.10 mm or more and 3.00 mm or less, 0.10 mm or more and 2.00 mm or less, 0.15 mm or more and 2.0 mm or less, or 0.2 mm or more and 1.5 mm or less.

### <Production Method>

A method of producing cable 10 according to the first embodiment will be described.

Conductor 1 is prepared.

The ethylene-tetrafluoroethylene copolymer or the polyvinylidene fluoride, the conductive filler, and, optionally, the other component such as the crosslinking auxiliary agent are mixed to obtain the first composition. The ethylene-tetrafluoroethylene copolymer or the polyvinylidene fluoride and, optionally, the other component such as the crosslinking auxiliary agent are mixed to obtain the second composition. The ethylene-tetrafluoroethylene copolymer or the polyvinylidene fluoride, the conductive filler, and, optionally, the other component such as the crosslinking auxiliary agent are mixed to obtain the third composition.

A three-layer simultaneous extruder is prepared. The three-layer simultaneous extruder includes an extruder A, an extruder B and an extruder C. The first composition, which is a raw material of the first semiconductive layer, is introduced into extruder A. The second composition, which is a raw material of insulating layer 3, is introduced into extruder B. A third composition, which is a raw material of second semiconductive layer 4, is introduced into extruder C.

Next, respective extrudates from extruder A, extruder B, and extruder C are guided to a common head, and the first composition, the second composition, and the third composition are simultaneously extruded to the outer periphery of conductor 1 from the inner side toward the outer side, thereby obtaining a first covered conductor in which conductor 1 is covered with a layer consisting of the first composition, a layer consisting of the second composition, and a layer consisting of the third composition.

Next, electron beam is applied to the first covered conductor so as to crosslink the first composition, the second composition, and the third composition, thereby obtaining the cable including, on the outer periphery of conductor 1 from the inner side toward the outer side, the first semiconductive layer consisting of the first crosslinked material, insulating layer 3 consisting of the second crosslinked material, and second semiconductive layer 4 consisting of the third crosslinked material.

When cable 10 includes shield layer 5 and jacket 6, the following steps are further performed. Shield layer 5 can be formed by, for example, providing a metal braid on the outer periphery of second semiconductive layer 4.

Next, the fourth composition including the ethylene-tetrafluoroethylene copolymer or the polyvinylidene fluoride, which is a raw material of jacket 6, is introduced into an extruder, and the fourth composition is extruded to the outer periphery of shield layer 5 to cover shield layer 5 with a layer consisting of the fourth composition, thereby obtaining a first covered conductor.

Next, the fourth composition is crosslinked by applying radiation to the first covered conductor, thereby obtaining cable 10 of the first embodiment in which the first semiconductive layer consisting of the first crosslinked material, insulating layer 3 consisting of the second crosslinked material, second semiconductive layer 4 consisting of the third crosslinked material, shield layer 5, and jacket 6 consisting of the fourth crosslinked material are provided in this order on the outer periphery of conductor 1 from the inner side toward the outer side.

As the radiation, electron beam, α ray, γ ray, or the like can be used. An energy amount of the radiation is such an energy amount that each of the first composition, the second composition, the third composition, and the fourth composition can be crosslinked. The energy amount of the radiation can be, for example, such an energy amount that the first covered conductor can receive an energy amount of 10 kGy or more and 480 kGy or less.

### Examples

The present embodiment will be described more specifically with reference to examples. However, the present embodiment is not limited by these examples.

### [Production of Cable]

Conductors of samples were prepared. Each of the conductors is a conductor obtained by twisting nineteen stranded wires each obtained by twisting seven nickel-plated copper wires each having an outer diameter of 0.35 mm.

A first composition, a second composition, and a third composition, each of which was used in each of the samples, were prepared. The content ratios of raw materials in the first composition, the second composition, and the third composition are as shown in Tables 1 and 2. In each of Tables 1 and 2, "ETFE" represents an ethylene-tetrafluoroethylene copolymer. In each of Tables 1 and 2, "Conductive Filler" represents carbon black. In each of Tables 1 and 2, "Other Component" represents an antioxidizing agent or a colorant. For example, the first composition of a sample 1 includes 80 mass% of the ETFE, 5 mass% of the other component, and 15 mass% of the conductive filler.

A three-layer simultaneous extruder including an extruder A, an extruder B and an extruder C was prepared. The first composition was introduced into extruder A, the second composition was introduced into extruder B, and the third composition was introduced into extruder C. Next, respective extrudates from extruder A, extruder B, and extruder C were guided to a common head, and the first composition, the second composition, and the third composition were simultaneously extruded to the outer periphery of the conductor from the inner side to the outer side, thereby obtaining a first covered conductor in which the conductor was covered with a layer consisting of the first composition, a layer consisting of the second composition, and a layer consisting of the third composition. The thicknesses of the layer consisting of the first composition, the layer consisting of the second composition, and the layer consisting of the third composition are as shown in Tables 1 and 2.

Next, in each of the samples indicated as "Applied" in the column "Application of Electron Beam" in Table 2, electron beam was applied to the first covered conductor so as to crosslink each of the first composition, the second composition, and the third composition, thereby obtaining a cable in which the first semiconductive layer consisting of the first crosslinked material, the insulating layer consisting of the second crosslinked material, and the second semiconductive layer consisting of the third crosslinked material were provided in this order on the outer periphery of the conductor from the inner side toward the outer side. An energy amount of the electron beam was such an energy amount that the first covered conductor can receive an energy amount of 180 kGy. The application of electron beam was not performed onto each of the samples indicated as "Not Applied" in the column "Application of Electron Beam" in Table 2.

### [Table 1]

**Table 1**

| Sample No. | First Composition | | | | | Second Composition | | | |
|---|---|---|---|---|---|---|---|---|---|
| | Raw Material | | | | Thickness | Raw Material | | | Thickness |
| | Resin Component | | Other Component | Conductive Filler | | Resin Component | | Other Component | |
| | Composition | Content Ratio | Content Ratio | Content Ratio | | Composition | Content Ratio | Content Ratio | |
| | | mass% | mass% | mass% | mm | | mass% | mass% | mm |
| 1 | ETFE | 80 | 5 | 15 | 0.10 | ETFE | 95 | 5 | 0.10 |
| 2 | ETFE | 50 | 5 | 45 | 0.10 | ETFE | 95 | 5 | 0.30 |
| 3 | ETFE | 75 | 5 | 20 | 0.10 | ETFE | 95 | 5 | 0.30 |
| 4 | ETFE | 80 | 5 | 15 | 0.10 | ETFE | 95 | 5 | 0.30 |
| 5 | ETFE | 75 | 5 | 20 | 0.10 | ETFE | 95 | 5 | 0.40 |
| 6 | ETFE | 80 | 5 | 15 | 0.10 | ETFE | 95 | 5 | 0.40 |
| 7 | ETFE | 75 | 5 | 20 | 0.10 | ETFE | 95 | 5 | 0.60 |
| 8 | ETFE | 75 | 5 | 20 | 0.10 | ETFE | 95 | 5 | 0.71 |
| 9 | ETFE | 80 | 5 | 15 | 0.10 | ETFE | 95 | 5 | 0.71 |
| 10 | ETFE | 80 | 5 | 15 | 0.10 | ETFE | 95 | 5 | 1.50 |
| 11 | ETFE | 80 | 5 | 15 | 0.10 | ETFE | 95 | 5 | 2.00 |
| 12 | ETFE | 80 | 5 | 15 | 0.10 | ETFE | 95 | 5 | 3.00 |
| 13 | ETFE | 80 | 5 | 15 | 0.50 | ETFE | 95 | 5 | 0.71 |
| 14 | ETFE | 80 | 5 | 15 | 0.60 | ETFE | 95 | 5 | 0.71 |
| 15 | PVdF | 80 | 5 | 15 | 0.10 | PVdF | 95 | 5 | 0.30 |
| 16 | PVdF | 80 | 5 | 15 | 0.10 | PVdF | 95 | 5 | 0.71 |
| 1-1 | ETFE | 80 | 5 | 15 | 0.10 | ETFE | 95 | 5 | 0.10 |
| 1-2 | ETFE | 50 | 5 | 45 | 0.10 | ETFE | 95 | 5 | 0.30 |
| 1-3 | ETFE | 75 | 5 | 20 | 0.10 | ETFE | 95 | 5 | 0.30 |
| 1-4 | ETFE | 80 | 5 | 15 | 0.10 | ETFE | 95 | 5 | 0.30 |
| 1-5 | ETFE | 75 | 5 | 20 | 0.10 | ETFE | 95 | 5 | 0.40 |
| 1-6 | ETFE | 80 | 5 | 15 | 0.10 | ETFE | 95 | 5 | 0.40 |
| 1-7 | ETFE | 75 | 5 | 20 | 0.10 | ETFE | 95 | 5 | 0.60 |
| 1-8 | ETFE | 75 | 5 | 20 | 0.10 | ETFE | 95 | 5 | 0.71 |
| 1-9 | ETFE | 80 | 5 | 15 | 0.10 | ETFE | 95 | 5 | 0.71 |
| 1-10 | ETFE | 80 | 5 | 15 | 0.10 | ETFE | 95 | 5 | 1.50 |
| 1-11 | ETFE | 80 | 5 | 15 | 0.10 | ETFE | 95 | 5 | 2.00 |
| 1-12 | ETFE | 80 | 5 | 15 | 0.10 | ETFE | 95 | 5 | 3.00 |
| 1-13 | ETFE | 80 | 5 | 15 | 0.50 | ETFE | 95 | 5 | 0.71 |
| 1-14 | ETFE | 80 | 5 | 15 | 0.60 | ETFE | 95 | 5 | 0.71 |
| 1-15 | PVdF | 80 | 5 | 15 | 0.10 | PVdF | 95 | 5 | 0.30 |
| 1-16 | PVdF | 80 | 5 | 15 | 0.10 | PVdF | 95 | 5 | 0.71 |

### [Table 2]

**Table 2**

| Sample No. | Third Composition | | | | | Application of Electron Beam |
|---|---|---|---|---|---|---|
| | Raw Material | | | | Thickness | |
| | Resin Component | | Other Component | Conductive Filler | | |
| | Composition | Content Ratio | Content Ratio | Content Ratio | | |
| | | mass% | mass% | mass% | mm | |
| 1 | ETFE | 80 | 5 | 15 | 0.10 | Applied |
| 2 | ETFE | 50 | 5 | 45 | 0.10 | Applied |
| 3 | ETFE | 75 | 5 | 20 | 0.10 | Applied |
| 4 | ETFE | 80 | 5 | 15 | 0.10 | Applied |
| 5 | ETFE | 75 | 5 | 20 | 0.10 | Applied |
| 6 | ETFE | 80 | 5 | 15 | 0.10 | Applied |
| 7 | ETFE | 75 | 5 | 20 | 0.10 | Applied |
| 8 | ETFE | 75 | 5 | 20 | 0.10 | Applied |
| 9 | ETFE | 80 | 5 | 15 | 0.10 | Applied |
| 10 | ETFE | 80 | 5 | 15 | 0.10 | Applied |
| 11 | ETFE | 80 | 5 | 15 | 0.10 | Applied |
| 12 | ETFE | 80 | 5 | 15 | 0.10 | Applied |
| 13 | ETFE | 80 | 5 | 15 | 0.50 | Applied |
| 14 | ETFE | 80 | 5 | 15 | 0.60 | Applied |
| 15 | PVdF | 80 | 5 | 15 | 0.10 | Applied |
| 16 | PVdF | 80 | 5 | 15 | 0.10 | Applied |
| 1-1 | ETFE | 80 | 5 | 15 | 0.10 | Not Applied |
| 1-2 | ETFE | 50 | 5 | 45 | 0.10 | Not Applied |
| 1-3 | ETFE | 75 | 5 | 20 | 0.10 | Not Applied |
| 1-4 | ETFE | 80 | 5 | 15 | 0.10 | Not Applied |
| 1-5 | ETFE | 75 | 5 | 20 | 0.10 | Not Applied |
| 1-6 | ETFE | 80 | 5 | 15 | 0.10 | Not Applied |
| 1-7 | ETFE | 75 | 5 | 20 | 0.10 | Not Applied |
| 1-8 | ETFE | 75 | 5 | 20 | 0.10 | Not Applied |
| 1-9 | ETFE | 80 | 5 | 15 | 0.10 | Not Applied |
| 1-10 | ETFE | 80 | 5 | 15 | 0.10 | Not Applied |
| 1-11 | ETFE | 80 | 5 | 15 | 0.10 | Not Applied |
| 1-12 | ETFE | 80 | 5 | 15 | 0.10 | Not Applied |
| 1-13 | ETFE | 80 | 5 | 15 | 0.50 | Not Applied |
| 1-14 | ETFE | 80 | 5 | 15 | 0.60 | Not Applied |
| 1-15 | PVdF | 80 | 5 | 15 | 0.10 | Not Applied |
| 1-16 | PVdF | 80 | 5 | 15 | 0.10 | Not Applied |

### [Evaluation]

### <Elastic Modulus of Each of First Semiconductive Layer, Insulating Layer and Second Semiconductive Layer at 330°C>

The elastic modulus of each of the first semiconductive layer, the insulating layer and the second semiconductive layer of the cable of each sample at 330°C is shown in the column "Elastic Modulus 330°C" in each of Tables 3 and 4. A specific measurement method is as described in the first embodiment. Each of the samples described as "Unmeasurable" in the column "Elastic Modulus 330°C" in each of Tables 3 and 4 as a result indicates that the measurement piece was melted before the measurement temperature reached 330°C and the measurement was unable to be performed.

### <Volume Resistivities of First Semiconductive Layer and Second Semiconductive Layer at Room Temperature and 100°C>

The volume resistivities, at the room temperature and 100°C, of the first semiconductive layer and the second semiconductive layer of the cable of each sample are shown in the columns "Volume Resistivity Room Temperature" and "Volume Resistivity 100°C" in Tables 3 and 4. A specific measurement method is as described in the first embodiment.

### <Thicknesses of First Semiconductive Layer, Insulating Layer and Second Semiconductive Layer>

The thicknesses of the first semiconductive layer, the insulating layer and the second semiconductive layer of the cable of each sample are shown in the column "Thickness" in Tables 3 and 4. A specific measurement method is as described in the first embodiment. In each of the samples, the thicknesses of the first semiconductive layer, the insulating layer and the second semiconductive layer in the cable are the same as the thicknesses of the layer consisting of the first composition, the layer consisting of the second composition and the layer consisting of the third composition in the first covered conductor, respectively.

### <Gap Length>

For each of the cables of the samples, a gap length was measured. A specific measurement method is as follows. A measurement sample was prepared in which the cable of each sample was further covered with a shield layer. In each sample, a plurality of the measurement samples were prepared to have different lengths of entire peripheral gaps between the cables and the shield layers. In each sample, AC voltage was applied between the conductor of the cable and the shield layer in the order of measurement samples having entire peripheral gaps with smaller lengths. A slight change in current was found, and when a discharge of 100 pC or more was detected, it was determined that partial discharge had occurred. The maximum length of the entire peripheral gap by which voltage causing occurrence of partial discharge becomes 4000 V or more is defined as the gap length. Results are shown in Table 4.

### [Table 3]

**Table 3**

| Sample No. | Evaluation | | | | | |
|---|---|---|---|---|---|---|
| | First Semiconductive Layer | | | | Insulating Layer | |
| | Volume Resistivity | | Elastic Modulus | Thickness | Elastic Modulus | Thickness |
| | Room Temperature | 100°C | 330°C | | 330°C | |
| | Ω·cm | Ω·cm | MPa | mm | MPa | mm |
| 1 | 1000 | 1900 | 2.7 | 0.10 | 2.3 | 0.10 |
| 2 | 10 | 20 | 3.3 | 0.10 | 2.3 | 0.30 |
| 3 | 100 | 210 | 2.9 | 0.10 | 2.3 | 0.30 |
| 4 | 1000 | 1900 | 2.7 | 0.10 | 2.3 | 0.30 |
| 5 | 100 | 210 | 2.9 | 0.10 | 2.3 | 0.40 |
| 6 | 1000 | 1900 | 2.7 | 0.10 | 2.3 | 0.40 |
| 7 | 100 | 210 | 2.9 | 0.10 | 2.3 | 0.60 |
| 8 | 100 | 210 | 2.9 | 0.10 | 2.3 | 0.71 |
| 9 | 1000 | 1900 | 2.7 | 0.10 | 2.3 | 0.71 |
| 10 | 1000 | 1900 | 2.9 | 0.10 | 2.3 | 1.50 |
| 11 | 1000 | 1900 | 2.9 | 0.10 | 2.3 | 2.00 |
| 12 | 1000 | 1900 | 2.7 | 0.10 | 2.3 | 3.00 |
| 13 | 1000 | 1900 | 2.7 | 0.50 | 2.3 | 0.71 |
| 14 | 1000 | 1900 | 2.7 | 0.60 | 2.3 | 0.71 |
| 15 | 1000 | 1900 | 1.8 | 0.10 | 1.3 | 0.30 |
| 16 | 1000 | 1900 | 1.8 | 0.10 | 1.3 | 0.71 |
| 1-1 | 1000 | 2600 | Unmeasurable | 0.10 | Unmeasurable | 0.10 |
| 1-2 | 10 | 28 | Unmeasurable | 0.10 | Unmeasurable | 0.30 |
| 1-3 | 100 | 290 | Unmeasurable | 0.10 | Unmeasurable | 0.30 |
| 1-4 | 1000 | 2600 | Unmeasurable | 0.10 | Unmeasurable | 0.30 |
| 1-5 | 100 | 290 | Unmeasurable | 0.10 | Unmeasurable | 0.40 |
| 1-6 | 1000 | 2600 | Unmeasurable | 0.10 | Unmeasurable | 0.40 |
| 1-7 | 100 | 290 | Unmeasurable | 0.10 | Unmeasurable | 0.60 |
| 1-8 | 100 | 290 | Unmeasurable | 0.10 | Unmeasurable | 0.71 |
| 1-9 | 1000 | 2600 | Unmeasurable | 0.10 | Unmeasurable | 0.71 |
| 1-10 | 1000 | 2600 | Unmeasurable | 0.10 | Unmeasurable | 1.50 |
| 1-11 | 1000 | 2600 | Unmeasurable | 0.10 | Unmeasurable | 2.00 |
| 1-12 | 1000 | 2600 | Unmeasurable | 0.10 | Unmeasurable | 3.00 |
| 1-13 | 1000 | 2600 | Unmeasurable | 0.50 | Unmeasurable | 0.71 |
| 1-14 | 1000 | 2600 | Unmeasurable | 0.60 | Unmeasurable | 0.71 |
| 1-15 | 1000 | 2800 | Unmeasurable | 0.10 | Unmeasurable | 0.30 |
| 1-16 | 1000 | 2800 | Unmeasurable | 0.10 | Unmeasurable | 0.71 |

### [Table 4]

**Table 4**

| Sample No. | Evaluation | | | | |
|---|---|---|---|---|---|
| | Second Semiconductive Layer | | | | Cable |
| | Volume Resistivity | | Elastic Modulus | Thickness | Gap Length |
| | Room Temperature | 100°C | 330°C | | |
| | Ω·cm | Ω·cm | MPa | mm | cm |
| 1 | 1000 | 1900 | 2.7 | 0.10 | 1.3 |
| 2 | 10 | 20 | 3.3 | 0.10 | 2.0 |
| 3 | 100 | 210 | 2.9 | 0.10 | 9.0 |
| 4 | 1000 | 1900 | 2.7 | 0.10 | 2.0 |
| 5 | 100 | 210 | 2.9 | 0.10 | 11.0 |
| 6 | 1000 | 1900 | 2.7 | 0.10 | 3.0 |
| 7 | 100 | 210 | 2.9 | 0.10 | 14.0 |
| 8 | 100 | 210 | 2.9 | 0.10 | 16.0 |
| 9 | 1000 | 1900 | 2.7 | 0.10 | 4.0 |
| 10 | 1000 | 1900 | 2.9 | 0.10 | 30.0 |
| 11 | 1000 | 1900 | 2.9 | 0.10 | 38.0 |
| 12 | 1000 | 1900 | 2.7 | 0.10 | 55.0 |
| 13 | 1000 | 1900 | 2.7 | 0.50 | 12.0 |
| 14 | 1000 | 1900 | 2.7 | 0.60 | 14.0 |
| 15 | 1000 | 1900 | 1.8 | 0.10 | 14.0 |
| 16 | 1000 | 1900 | 1.8 | 0.10 | 15.0 |
| 1-1 | 1000 | 2600 | Unmeasurable | 0.10 | 1.3 |
| 1-2 | 10 | 28 | Unmeasurable | 0.10 | 2.0 |
| 1-3 | 100 | 290 | Unmeasurable | 0.10 | 9.0 |
| 1-4 | 1000 | 2600 | Unmeasurable | 0.10 | 2.0 |
| 1-5 | 100 | 290 | Unmeasurable | 0.10 | 11.0 |
| 1-6 | 1000 | 2600 | Unmeasurable | 0.10 | 3.0 |
| 1-7 | 100 | 290 | Unmeasurable | 0.10 | 14.0 |
| 1-8 | 100 | 290 | Unmeasurable | 0.10 | 16.0 |
| 1-9 | 1000 | 2600 | Unmeasurable | 0.10 | 4.0 |
| 1-10 | 1000 | 2600 | Unmeasurable | 0.10 | 30.0 |
| 1-11 | 1000 | 2600 | Unmeasurable | 0.10 | 38.0 |
| 1-12 | 1000 | 2600 | Unmeasurable | 0.10 | 55.0 |
| 1-13 | 1000 | 2600 | Unmeasurable | 0.50 | 12.0 |
| 1-14 | 1000 | 2600 | Unmeasurable | 0.60 | 14.0 |
| 1-15 | 1000 | 2800 | Unmeasurable | 0.10 | 14.0 |
| 1-16 | 1000 | 2800 | Unmeasurable | 0.10 | 15.0 |

### [Review]

The cables of samples 1 to 16 correspond to examples of the present disclosure. The cables of samples 1-1 to 1-16 correspond to comparative examples.

In each of the cables of samples 1 to 16, the elastic modulus of each of the first semiconductive layer, the insulating layer, and the second semiconductive layer at 330°C was 0.1 MPa or more, and it was confirmed that each of the first semiconductive layer, the insulating layer, and the second semiconductive layer was not melted even when used under the high temperature condition.

In each of the cables of samples 1-1 to 1-16, each of the first semiconductive layer, the insulating layer, and the second semiconductive layer was melted at a temperature lower than 330°C, and it was confirmed that each of the first semiconductive layer, the insulating layer, and the second semiconductive layer was melted when used under the high temperature condition.

The cables of samples 1, 4, 6, 9, 10, 11, and 12 have the same structure except for the thicknesses of the insulating layers. In view of a comparison among these samples, it was confirmed that as the thickness of the insulating layer is larger, the gap length is longer.

The cables of samples 3, 5, 7, and 8 have the same structure except for the thicknesses of the insulating layers. In view of a comparison among these samples, it was confirmed that as the thickness of the insulating layer is larger, the gap length is longer.

Although the embodiments and examples of the present disclosure have been described as described above, it is also initially expected to appropriately combine or variously modify the configurations of the above-described embodiments and examples.

The embodiments and examples disclosed herein are illustrative and non-restrictive in any respect. The scope of the present invention is defined by the terms of the claims, rather than the embodiments and examples described above, and is intended to include any modifications within the scope and meaning equivalent to the terms of the claims.

### REFERENCE SIGNS LIST

1 conductor; 2 first semiconductive layer; 3 insulating layer; 4 second semiconductive layer; 5 shield layer; 6 jacket; 10 cable; G entire peripheral gap; L gap length

## Claims

1. A cable comprising:
a conductor;
a first semiconductive layer that covers an outer periphery of the conductor;
an insulating layer that covers an outer periphery of the first semiconductive layer; and
a second semiconductive layer that covers an outer periphery of the insulating layer, wherein
the first semiconductive layer consists of a first crosslinked material of a first composition including an ethylene-tetrafluoroethylene copolymer or polyvinylidene fluoride and a conductive filler,
the insulating layer consists of a second crosslinked material of a second composition including an ethylene-tetrafluoroethylene copolymer or polyvinylidene fluoride, and
the second semiconductive layer consists of a third crosslinked material of a third composition including an ethylene-tetrafluoroethylene copolymer or polyvinylidene fluoride and a conductive filler.

2. The cable according to claim 1, wherein an average thickness of the insulating layer is 0.10 mm or more and 2.0 mm or less.

3. The cable according to claim 1 or 2, wherein an average thickness of the insulating layer is more than 0.70 mm.

4. The cable according to any one of claims 1 to 3, wherein an average thickness of the first semiconductive layer is 0.10 mm or more and 0.5 mm or less.

5. The cable according to any one of claims 1 to 4, wherein an average thickness of the second semiconductive layer is 0.10 mm or more and 0.5 mm or less.

6. The cable according to any one of claims 1 to 5, further comprising: a shield layer that covers an outer periphery of the second semiconductive layer; and a jacket that covers an outer periphery of the shield layer, wherein
the jacket consists of a fourth crosslinked material of a fourth composition including an ethylene-tetrafluoroethylene copolymer or polyvinylidene fluoride.

7. The cable according to any one of claims 1 to 6, wherein an elastic modulus of the first semiconductive layer at 330°C is 0.1 MPa or more.

8. The cable according to any one of claims 1 to 7, wherein an elastic modulus of the insulating layer at 330°C is 0.1 MPa or more.

9. The cable according to any one of claims 1 to 8, wherein an elastic modulus of the second semiconductive layer at 330°C is 0.1 MPa or more.
